# EUROPÄISCHE PATENTANMELDUNG

(11) **EP 3 002 868 A1**
(43) Veröffentlichungstag der Anmeldung: **06.04.2016**
(21) Anmeldenummer: 14187110.3
(22) Anmeldetag: 30.09.2014
(51) Int. Cl.: H02M 7/757, H02J 3/18, H02M 7/483

(54) **Hybrider M2C-Diodengleichrichter**

(71) Anmelder: Siemens Aktiengesellschaft, 80333 München (DE)
(72) Erfinder: Sahan, Benjamin, 90762 Fürth (DE); Hiller, Marc, 91207 Lauf an der Pegnitz (DE)

(57) **Zusammenfassung**

Die Erfindung betrifft eine Stromrichterschaltung (1) aufweisend eine Eingangsschaltung (2), einen Zwischenkreis (3), einen modularen Multilevel-Stromrichter (4) und einen netzgeführten Stromrichter (5), wobei an den Zwischenkreis (3) eine Antriebseinheit (6) anschließbar ist, wobei am wechselspannungsseitigen Ausgang (41) des modularen Multilevel-Stromrichters eine stufenförmige Ausgangsspannung erzeugbar ist, wobei der erste Stromrichteranschluss (22) der Eingangsschaltung (2) mit dem wechselspannungsseitigen Anschluss (41) des modularen Multilevel-Stromrichters (4) und der zweite Stromrichteranschluss (23) der Eingangsschaltung (2) mit dem wechselspannungsseitigen Anschluss (51) des netzgeführten Stromrichters (5) elektrisch verbunden sind, wobei der Zwischenkreis (3) mit dem gleichspannungsseitigem Anschluss (52) des netzgeführten Stromrichters (5) elektrisch verbunden ist, wobei die Eingangsschaltung (2) mit einem Energieversorgungsnetz (7) verbindbar ist, wobei der modulare Multilevel-Stromrichter (4) derart betreibbar ist, dass bei einer Verbindung der Eingangsschaltung (2) mit dem Energieversorgungsnetz (7) ein vorgebbarer zeitlicher Verlauf eines Eingangsstromes (26) erzeugbar ist. Die Erfindung betrifft weiter ein Verfahren zum Betreiben einer solchen Stromrichterschaltung (1), wobei der modulare Multilevel-Stromrichter (4) derart gesteuert wird, einen Eingangsstrom (26) mit einem vorgebbare Zeitverlauf am Eingang (21) der Eingangsschaltung (2) zu erzeugen.

## Beschreibung

Die Erfindung betrifft eine Stromrichterschaltung, aufweisend einen modularen Multilevel-Stromrichter mit einem wechselspannungsseitigen Anschluss. Die Erfindung betrifft weiter ein Verfahren zum Betreiben einer solchen Stromrichterschaltung.

Stromrichter werden dazu verwendet, elektrische Leistung bezüglich Spannungshöhe, Stromhöhe, Frequenz und Phasenlage umzuwandeln. Stromrichter für die Umwandlung von Wechselspannung in Gleichspannung bzw. von Wechselstrom in Gleichstrom werden als Gleichrichter bezeichnet. Demgegenüber bezeichnet man Stromrichter für die Umwandlung von Gleichspannung in Wechselspannung bzw. von Gleichstrom in Wechselstrom als Wechselrichter. Stromrichter für die Umwandlung von Leistungen mit Spannungen/Strömen einer Frequenz in eine andere Frequenz werden als (Frequenz-)Umrichter bezeichnet.

Stromrichter werden eingesetzt, um elektrische Maschinen und Motoren gezielt mit elektrischer Energie zu versorgen. Dadurch sind diese elektrische Maschinen und Motoren durch die Stromrichter steuerbar und regelbar. Ein weiteres Anwendungsgebiet ist die Steuerung von Energieflüssen, die Kompensation von Oberschwingungen und das Bereitstellen von Blindleistung in Energieversorgungsnetzen. Darüber hinaus werden Stromrichter zur Übertragung von Energie zwischen zwei Energieversorgungsnetzen eingesetzt. Eine besondere Art der Kopplung zweier Energieversorgungsnetze, an der Stromrichter beteiligt sind, ist die verlustarme Übertragung von Energie mittels Hochspannungsgleichstromübertragung (HGÜ).

In der Antriebstechnik versorgt ein Frequenzumrichter einen Motor. Dabei wird in einem ersten Schritt zunächst die Netzspannung mittels eines Stromrichters in eine Gleichspannung umgewandelt. Aus dieser Gleichspannung wird mit einem weiteren Stromrichter eine Wechselspannung zur Versorgung des Motors erzeugt. Zur Anpassung der unterschiedlichen Spannungen von Energieversorgungsnetz und Stromrichter des Antriebssystems wird häufig ein Transformator verwendet. Mit diesem ist es möglich, die Spannung des Energieversorgungsnetzes derart für den Stromrichter anzupassen, dass dieser mit dem Energieversorgungsnetz verbunden werden kann. Gleichzeitig wird eine galvanische Entkopplung zum Energieversorgungsnetz hergestellt.

Im Folgenden soll der netzseitige Stromrichter näher betrachtet werden.

Beim Betrieb eines konventionelle Stromrichters entstehen, unabhängig davon, ob dieser als netzgeführter oder als selbstgeführter Stromrichter ausgeführt ist, unerwünschte Oberschwingungen in Netzstrom und Netzspannung. Diese können Netzrückwirkungen verursachen. Mit Netzrückwirkungen bezeichnet man allgemein eine unerwünschte Beeinflussung des Netzes.

Bedingt durch eine zunehmende Komplexität des Energieversorgungsnetzes (zunehmende Einspeisung fluktuierender Energiequellen, höhere Prozessanforderungen) nehmen die Anforderungen an die Netzqualität stetig zu. Industrielle Antriebe verbrauchen einen Großteil der insgesamt erzeugten elektrischen Energie. Zur Minimierung von Netzrückwirkungen ist es somit wünschenswert, dem Netz zur Versorgung des Antriebs sinusförmige Ströme mit einem möglichst geringen Störstromanteil (Oberschwingungsgehalt) zu entnehmen. Dies wirkt sich auch positiv auf eine Erwärmung und somit auf die Haltbarkeit vorhandener Transformatoren aus.

Zur Minimierung von Oberschwingungen bei konventionellen, selbstgeführten Stromrichtern, die oftmals in Zweipunkt oder in Dreipunkt-Technik ausgeführt sind, kommen Netzfilter zum Einsatz. Diese beseitigen zuverlässig Oberschwingungen, durch den gepulsten Betrieb des Stromrichters entstehen. Wenn keine Rückspeisefähigkeit benötigt wird, ist der Einsatz von selbstgeführten Stromrichtern jedoch relativ teuer und aufwändig. Üblicherweise kommen im Hochleistungsbereich dann mehrpulsige Gleichrichter mit Mehrwicklungstransformatoren zum Einsatz. Diese Gleichrichter sind üblicherweise als Dioden- oder Thyristorgleichrichter ausgeführt. So entsteht beispielsweise durch die Anordnung zweier Gleichrichter eine zwölfpulsige Gleichrichteranordnung. Für diese Anordnung ist eine spezielle Transformatorausführung erforderlich. Oberschwingungen im Strom treten auch in diesem Anwendungsfall auf.

Idealerweise ist es wünschenswert, den Antrieb direkt aus einem Mittelspannungsnetz ohne Transformator zu versorgen. Dies ist bisher aufgrund der hohen Spannungen mit konventionellen Stromrichtern nicht möglich. Allerdings bietet der modulare Multilevel-Stromrichter (M2C, modular multilevel converter) die Möglichkeit, effizient sehr hohe Spannung zu realisieren, die einen direkten Anschluss an das Mittelspannungsnetz erlauben. Dieser Stromrichter ist bereits aus der DE 101 03 031 A1 sowie aus der Veröffentlichung "Modulares Stromrichterkonzept für Netzkupplungsanwendung bei hohen Spannungen", von Rainer Marquardt, Anton Lesnicar und Jürgen Hildinger, abgedruckt im Tagungsband der ETG-Tagung 2002, bekannt. Prinzipbedingt sind die durch den M2C entstehenden Oberschwingungen dabei derart gering, dass auf Netzfilter vollständig oder zumindest größtenteils verzichtet werden kann. Der Einsatz von Netzfiltern ist daher bei diesem Stromrichter nicht erforderlich. Allerdings ist dieser modulare Multilevel-Stromrichter aufgrund seiner Komplexität relativ aufwendig.

Der Erfindung liegt die Aufgabe zugrunde, eine Stromrichterschaltung anzugeben, die einen geringen Oberschwingungsanteil aufweist, verlustarm und kostengünstig ist.

Diese Aufgabe wird durch eine Stromrichterschaltung gelöst, wobei die Stromrichterschaltung eine Eingangsschaltung mit einem Eingang, einem ersten Stromrichteranschluss und einem zweiten Stromrichteranschluss, einen Zwischenkreis, einen modularen Multilevel-Stromrichter mit einem wechselspannungsseitigen Anschluss und einen netzgeführten Stromrichter mit einem wechselspannungsseitigen Anschluss und einem gleichspannungsseitigen Anschluss aufweist, wobei an den Zwischenkreis eine Antriebseinheit oder ein weiteres Energieversorgungsnetz anschließbar ist, wobei der modulare Multilevel-Stromrichter Submodule aufweist, mit denen am wechselspannungsseitigen Ausgang des modularen Multilevel-Stromrichters eine stufenförmige Ausgangsspannung erzeugbar ist, dessen Stufenanzahl von der Anzahl der Submodule abhängt, wobei der erste Stromrichteranschluss der Eingangsschaltung mit dem wechselspannungsseitigen Anschluss des modularen Multilevel-Stromrichters und der zweite Stromrichteranschluss der Eingangsschaltung mit dem wechselspannungsseitigen Anschluss des netzgeführten Stromrichters elektrisch verbunden sind, wobei der Zwischenkreis mit dem gleichspannungsseitigem Anschluss des netzgeführten Stromrichters elektrisch verbunden ist, wobei der Eingang der Eingangsschaltung mit einem Energieversorgungsnetz verbindbar ist, wobei der modulare Multilevel-Stromrichter derart betreibbar ist, dass bei einer Verbindung des Eingangs der Eingangsschaltung mit dem Energieversorgungsnetz ein vorgebbarer zeitlicher Verlauf eines Eingangsstromes erzeugbar ist.

Die Aufgabe wird weiter durch ein Verfahren zum Betreiben einer solchen Stromrichterschaltung gelöst.

Der Erfindung liegt die Erkenntnis zu Grunde, dass eine Stromrichterschaltung mit geringem Oberschwingungsanteil dadurch realisieren lässt, dass ein modularer Multilevel-Stromrichter (M2C, modular multilevel converter) mit einem netzgeführten Stromrichter kombiniert wird. Dabei werden der modulare Multilevel-Stromrichter und der netzgeführten Stromrichter über eine Eingangsschaltung mit dem Energieversorgungsnetz verbunden. Zur Entkopplung der Stromrichter hat es sich als sinnvoll erwiesen, wenn die Eingangsschaltung eine Induktivität aufweist. Mithilfe der Induktivität ist es auch möglich, den Netzstrom durch mindestens einen der Stromrichter, insbesondere dem modularen Multilevel-Stromrichter, besonders genau zu regeln. Die Überlagerung der Ströme vom netzgeführten Stromrichter und modularen Multilevel-Stromrichter führt zu einem Netzstrom mit geringem Oberschwingungsanteil. Dabei werden die Oberschwingungen des netzgeführten Stromrichters durch entsprechende Ströme des modularen Multilevel-Stromrichters kompensiert. Durch die Kombination des einfachen und kostengünstigen netzgeführten Stromrichters mit dem modularen Multilevel-Stromrichter kann ein möglichst großer Teil der Wirkleistung über den netzgeführten Stromrichter geführt werden, während der hochdynamisch steuerbare modulare Multilevel-Stromrichter derart gesteuert oder geregelt wird, den sich ergebenden Netzstrom zu glätten. Hierdurch können nahezu beliebige Stromverläufe für den Eingangsstrom erzeugt werden. Als besonders vorteilhaft hat es sich ergeben, einen Sinusverlauf für den Netzstrom zu erzeugen. Der Strom am wechselspannungsseitigen Anschluss des modularen Multilevel-Stromrichters ergibt sich aus der Differenz des gewünschten Netzstromes und des Stromes des netzgeführten Stromrichters. Am Ausgang der Stromrichterschaltung, die den Zwischenkreis darstellt, kann eine Antriebseinheit mit Wechselrichter und Motor oder ein weiteres Energieversorgungsnetz angeschlossen werden. Beim Energieversorgungsnetz kann es sich um ein Gleichspannungsnetz oder um Ein Wechselspannungs- oder Drehstromnetz handeln. Im Falle des Wechselspannungs- oder Drehstromnetz ist ein weiterer Stromrichter notwendig, der die Gleichspannung am Zwischenkreis in eine Wechselspannung umwandelt. Zur Anpassung der Spannungen kann hier gegebenenfalls ein weiterer Transformator vorgesehen werden. Der Zwischenkreis kann dabei als Spannungszwischenkreis oder als Stromzwischenkreis ausgebildet sein. Der Zwischenkreis der Stromrichterschaltung ist mit dem gleichspannungsseitigen Anschluss des netzgeführten Stromrichters elektrisch verbunden. Der Zwischenkreis der Stromrichterschaltung wird über den netzgeführten Stromrichter mit Energie versorgt. Aufgrund der geringen Verluste des netzgeführten Stromrichters ist die Übertragung der Wirkleistung durch die erfindungsgemäße Anordnung verlustarm. Dabei ist es möglich die gesamte Wirkleistung über den netzgeführten Stromrichter in den Zwischenkreis zu übertragen. Der modulare Multilevel-Stromrichter hat dann die Funktion eines aktiven Netzfilters und/oder eines Phasenschiebers. Er tauscht in dieser Betriebsart Blindleistung aus. Er braucht in diesem Falle nicht mit seinem gleichspannungsseitigen Anschluss elektrisch mit dem Zwischenkreis in Verbindung zu stehen. Der modulare Multilevel-Stromrichter kann von dem Zwischenkreis elektrisch isoliert sein. Der modulare Multilevel-Stromrichter kann in diesem Fall auch ohne gleichspannungsseitigen Anschluss ausgeführt sein. Dies wirkt sich für den modularen Multilevel-Stromrichter positiv aus, da zum einen der Effektivwert des Phasenstroms gering ist und die Verlustaufteilung der Leistungshalbleiter (IGBTs) vom Leistungsfaktor abhängt und bei einem cos (ϕ)=0 annähernd symmetrisch ist. Dadurch lassen sich die IGBTs wesentlich besser ausnutzen.

Bei den Oberschwingungen handelt es sich um die Komponenten die im Betrieb des netzgeführten Stromrichters entstehen und durch den modularen Multilevel-Stromrichter kompensiert werden. Hierbei handelt es sich um Harmonische, der 5./7., 11./13. 17./19. Ordnung. Allgemein entstehen beim Betrieb einer 6-pulsigen Diodenbrücke Harmonische der Ordnung **6*k* ± 1,** die durch den modularen Multilevel-Stromrichter kompensiert werden. Eine 12pulsige Diodenbrücke erzeugt Harmonische der Ordnung **12*k* ± 1.**

Weist der modulare Multilevel-Stromrichter einen gleichspannungsseitigen Anschluss auf, so kann dieser mit dem Zwischenkreis der Stromrichterschaltung elektrisch verbunden werden. Dadurch ist es möglich, auch mit dem modularen Multilevel-Stromrichter Wirkleistung vom Energieversorgungsnetz in den Zwischenkreis zu übertragen. Die Aufteilung der Energiemenge zwischen netzgeführtem Stromrichter und modularem Multilevel-Stromrichter kann beliebig festgelegt werden. Je größer der Anteil des netzgeführten Stromrichters an der Energieübertragung in den Zwischenkreis ist, desto höher sind die entstehenden Stromoberschwingungen, die kompensiert werden müssen. Je größer die übertragene Leistung des modularen Multilevel-Stromrichters, desto größer sind die Kosten für die Stromrichterschaltung. Es hat sich als besonders günstig erwiesen, wenn der modulare Multilevel-Stromrichter ca. 30% bis 50% des Eingangsstroms führt und der restliche Anteil über den netzgeführten Stromrichter fließt. In diesem Fall erreicht man eine besonders kostengünstige Stromrichterschaltung.

Die Stromrichterschaltung ist aufgrund des modularen Aufbaus, sowohl des modularen Multilevel-Stromrichters als auch aufgrund der Möglichkeit, den netzgeführten Stromrichter modular aufzubauen, einfach an bestehende Gegebenheiten des Energieversorgungsnetzes anpassbar. Die Lösung ist daher hochflexibel und einfach skalierbar bezüglich Spannungen und zu übertragenden Leistungen, so dass hieraus kostengünstig Stromrichterschaltungen für unterschiedliche Anforderungen einfach aufgebaut werden können.

Bei einer weiteren vorteilhaften Ausgestaltungsform ist der modulare Multilevel-Stromrichter derart betreibbar, dass am Eingang der Eingangsschaltung ein Verlauf des Eingangsstromes erzeugbar ist, der nahezu einem Sinusverlauf entspricht. Um störende Netzrückwirkungen zu vermeiden, ist es notwendig, für den Netzstrom einen Verlauf zu erzeugen, der möglichst genau einem Sinusverlauf entspricht. In diesem Fall sind idealerweise keine harmonischen im Netzstrom enthalten. Dieser Netzstrom ist dann oberschwingungsfrei. Auf die Verwendung von Netzfiltern kann in diesem Fall verzichtet werden.

Bei einer weiteren vorteilhaften Ausgestaltungsform sind der modulare Multilevel-Stromrichter und der netzgeführten Stromrichter jeweils wechselspannungsseitigen elektrisch parallel angeordnet. Bei dieser Anordnung überlagern sich die einzelnen Ströme des netzgeführten Stromrichters und des Multilevel-Stromrichters additiv zum Netzstrom. Die im netzgeführten Stromrichter vorhandenen Oberschwingungen können durch entsprechende gleiche Ströme mit entgegengesetztem Vorzeichen kompensiert werden. Damit ist es auf besonders einfache Weise möglich, störende Oberschwingungen des netzgeführten Stromrichters durch den Multilevel-Stromrichter zu eliminieren. Diese Oberschwingungen treten dann im Eingangsstrom zum Energieversorgungsnetz nicht auf.

Bei einer weiteren vorteilhaften Ausgestaltungsform sind der erste Stromrichteranschluss der Eingangsschaltung und der zweite Stromrichteranschluss der Eingangsschaltung galvanisch voneinander getrennt. Für den Fall, das sowohl der netzgeführte Stromrichter als auch der modulare Multilevel-Stromrichter mit dem Zwischenkreis der Stromrichterschaltung verbunden sind, führt die galvanische Trennung dazu, dass lediglich die Spannungsdifferenz der gleichspannungsseitigen Anschlüsse von Bedeutung ist. Die Potenziale der gleichspannungsseitigen Anschlüsse gegenüber einem Bezugspotential sind aufgrund der galvanischen Trennung nicht mehr von Bedeutung und müssen daher nicht geregelt oder gesteuert werden. Damit können Ausgleichsströme zwischen den beiden Stromrichtern auf einfache Weise verhindert werden. Eine entsprechende Regelung zur Verhinderung oder Reduzierung von Ausgleichströmen ist nicht erforderlich.

Bei einer weiteren vorteilhaften Ausgestaltungsform weist die Eingangsschaltung in einer elektrischen Verbindung zwischen dem ersten Stromrichteranschluss und dem zweiten Stromrichteranschluss einen Transformator auf. Mit einem Transformator ist es auf besonders einfache Weise möglich, eine galvanische Trennung herzustellen. Darüber hinaus erlaubt der Transformator, Stromrichter mit unterschiedlichen Nominal- oder Bemessungsspannung miteinander zu kombinieren. Die Anpassung der unterschiedlichen Stromrichterspannungen erfolgt über das Übersetzungsverhältnis des Transformators.

Bei einer weiteren vorteilhaften Ausgestaltungsform weist die Eingangsschaltung einen Transformator mit mindestens drei Wicklungssystemen auf, wobei das erste Wicklungssystem mit dem Eingang der Eingangsschaltung elektrisch verbunden ist, wobei das zweite Wicklungssystem mit dem ersten Stromrichteranschluss der Eingangsschaltung elektrisch verbunden ist und wobei das dritte Wicklungssystem mit dem zweiten Stromrichteranschluss der Eingangsschaltung elektrisch verbunden ist. Bei dieser Anordnung sind sowohl die beiden Stromrichter als auch das Energieversorgungsnetz voneinander galvanisch getrennt. Durch den Transformator können die Spannungen der beiden Stromrichter an das Energieversorgungsnetz angepasst werden. Durch die galvanische Entkopplung zum Energieversorgungsnetz führt ein Erdschluss in der Stromrichterschaltung nicht zwangsläufig zum Abschalten der Stromrichterschaltung, dadurch die galvanische Trennung Erdströme zuverlässig verhindert werden. Das Potenzial der Stromrichterschaltung kann gegenüber dem Potenzial des Energieversorgungsnetzes frei gewählt werden. Mit diesem Transformator können auf besonders einfache Weise verschiedene Stromrichter an beliebige Energieversorgungsnetze angepasst werden.

Bei einer weiteren vorteilhaften Ausgestaltungsform weist der modulare Multilevel-Stromrichter einen gleichspannungsseitigen Anschluss auf. Dieser gleichspannungsseitige Anschluss ist mit dem Zwischenkreis der Stromrichterschaltung verbindbar. In diesem Fall kann der Zwischenkreis nicht nur mit Energie über den netzgeführten Stromrichter, sondern auch über den modularen Multilevel-Stromrichter gespeist werden. Damit ergibt sich ein Freiheitsgrad in der Dimensionierung und Auslegung der beiden Stromrichter, der dazu genutzt werden kann, die Kosten für diese Stromrichterschaltung zu minimieren. Die Aufteilung des Energieflusses auf die beiden Stromrichter kann durch die Regelung des modularen Multilevel-Stromrichters erfolgen. Der Energiefluss über den netzgeführten Stromrichter kann beispielsweise durch Variation der Spannung am gleichspannungsseitigen Anschluss beeinflusst werden. Diese Eigenschaft ist für Regelungszwecke einfach nutzbar.

Bei einer weiteren vorteilhaften Ausgestaltungsform sind der gleichspannungsseitige Anschluss des modularen Multilevel-Stromrichters und der gleichspannungsseitige Anschluss des netzgeführten Stromrichters in einer Parallelschaltung angeordnet, wobei die Parallelschaltung den Zwischenkreis darstellt. Durch die Verbindung der Gleichspannungsseiten beider Stromrichter ist die Aufteilung der zu übertragenden Wirkleistung auf beide Stromrichter steuerbar und/oder regelbar. Damit ist eine kostengünstige Auslegung der beiden Stromrichter möglich. Als besonders günstig hat es sich erwiesen, wenn der modulare Multilevel-Stromrichter für ca. 30% bis 50% des Eingangsstromes ausgelegt wird. Daraus ergibt sich eine kostengünstige Stromrichterschaltung.

Bei einer weiteren vorteilhaften Ausgestaltungsform sind der gleichspannungsseitige Anschluss des modularen Multilevel-Stromrichters und der gleichspannungsseitige Anschluss des netzgeführten Stromrichters in einer Reihenschaltung angeordnet, wobei die Reihenschaltung den Zwischenkreis darstellt. Schwankungen in der Amplitude der Netzspannung wirken sich im Allgemeinen direkt auf die Zwischenkreisspannung aus. Durch eine gleichspannungsseitige Reihenschaltung von netzgeführten Stromrichter und modularen Multilevel-Stromrichter kann dieser Nachteil behoben werden, da die Spannung an den gleichspannungsseitigen Anschlüssen des modularen Multilevel-Stromrichters steuerbar ist. Abhängig von der zu übertragenden Wirkleistung kann hier eine Gleichspannung eingestellt werden, die sich zur Spannung des netzgeführten Stromrichters addiert. So kann bei einer Netzunteroder Netzüberspannung die Zwischenkreisspannung stabilisiert werden. Einer nachgeordneten Antriebseinheit und dem dazugehörigen weiteren Wechselrichter kann damit zuverlässig eine konstante Gleichspannung zur Verfügung gestellt werden. Damit werden Anforderungen an die Antriebseinheit bezüglich möglicher Netzeingangsspannungen und dazugehöriger Toleranzen reduziert, so dass hier kostengünstige Wechselrichter zum Einsatz kommen können. Ein zuverlässiger Betrieb des gesamten Antriebssystems kann hierdurch auf besonders einfache Weise sichergestellt werden.

Bei einer weiteren vorteilhaften Ausgestaltungsform sind der gleichspannungsseitige Anschluss des modularen Multilevel-Stromrichters und der gleichspannungsseitige Anschluss des netzgeführten Stromrichters elektrisch getrennt. Bei dieser Anordnung wird die gesamte Wirkleistung durch den netzgeführten Stromrichter übertragen der modulare Multilevel-Stromrichter kann bei dieser Anordnung besonders einfach ausgeführt werden, da er zur Wirkleistungsübertragung vom Energieversorgungsnetz in den Zwischenkreis nicht beiträgt. Somit ist er besonders kostengünstig herstellbar.

Bei einer weiteren vorteilhaften Ausgestaltungsform weist der modulare Multilevel-Stromrichter mindestens ein Phasenmodul mit mindestens drei Phasenmodulanschlüsse auf, wobei das Phasenmodul zwischen einem ersten Phasenmodulanschluss und einem zweiten Phasenmodulanschluss eine Reihenschaltung von einem ersten Stromrichterventil und einem zweiten Stromrichterventil aufweist, wobei eine elektrische Verbindung zwischen dem ersten Stromrichterventil und dem zweiten Stromrichterventil mit einem dritten Phasenmodulanschluss elektrisch verbunden ist, wobei der dritte Phasenmodulanschluss den wechselspannungsseitigen Anschluss des modularen Multilevel-Stromrichters darstellt, wobei der erste Phasenmodulanschluss und der zweite Phasenmodulanschluss den gleichspannungsseitigen Anschluss des modularen Multilevel-Stromrichters darstellen, wobei im Falle von mehr als einem Phasenmodul diese bezüglich ihres ersten Phasenmodulanschlusses und ihres zweiten Phasenmodulanschluss in einer Parallelschaltung angeordnet sind und wobei das erste Stromrichterventil und das zweite Stromrichterventil jeweils eine Reihenschaltung von Submodulen aufweisen. Mit dieser Anordnung ist abhängig von der Anzahl der Submodule ein beliebiger Stromverlauf des Netzstromes erzeugbar. Je höher die Anzahl der Submodule desto genauer ist der Stromverlauf des Netzstromes realisierbar. Insbesondere ein Sinusverlauf kann auf besonders einfache und genaue Weise erzeugt werden. Darüber hinaus bietet diese Ausgestaltungsform die Möglichkeit, den Zwischenkreis der Stromrichterschaltung auch mit dem modularen Multilevel-Stromrichter zu verbinden.

Bei einer weiteren vorteilhaften Ausgestaltungsform weist der modulare Multilevel-Stromrichter mindestens zwei Phasenmodule mit jeweils einem ersten Phasenmodulanschluss und einen zweiten Phasenmodulanschluss auf, wobei die Phasenmodule jeweils zwischen dem ersten Phasenmodulanschluss und dem zweiten Phasenmodulanschluss eine Reihenschaltung von Submodulen aufweisen, wobei an Anschlussklemmen der Submodule Spannungen mit unterschiedlicher Polarität erzeugbar sind, wobei der erster Phasenmodulanschluss der mindestens zwei Phasenmodulanschlüsse den wechselspannungsseitigen Anschluss des modularen Multilevel-Stromrichters darstellt und wobei jeweils der zweite Phasenmodulanschluss der Phasenmodule miteinander elektrisch verbunden sind. Bei dieser Ausgestaltungsform lassen sich bereits mit einer relativ geringen Anzahl an Submodulen beliebige Zeitverläufe für den Netzstrom erzeugen. Durch die geringere Anzahl von Submodulen vereinfacht sich auch die Regelung und Steuerung des modularen Multilevel-Stromrichters.

Bei einer weiteren vorteilhaften Ausgestaltungsform ist der netzgeführten Stromrichter als Dioden-Gleichrichter ausgeführt. Hierbei ist der netzgeführten Stromrichter besonders kostengünstig realisierbar. Da dieser Stromrichter nicht steuerbar ist, entfallen Kosten für eine entsprechende Ansteuerung oder Regelung. Da die Dioden keine Schaltverluste und nur geringe Durchlassverluste aufweisen, ist die Übertragung der Wirkleistung durch die Diodenbrücke besonders verlustarm. Auch mit dieser Anordnung sind nahezu sinusförmige Netzströme realisierbar. Für das Betriebsverhalten des Dioden-Gleichrichters hat es sich als günstig erwiesen, wenn die Eingangsschaltung eine Induktivität aufweist. Mit dieser kann der Dioden-Gleichrichter vom Energieversorgungsnetz entkoppelt werden.

Bei einer weiteren vorteilhaften Ausgestaltungsform weist der netzgeführte Stromrichter eine Thyristorbrückenschaltung auf. Mit dieser Anordnung ist es möglich, die Auswirkungen von Netzüberspannungen auf den Zwischenkreis zu verhindern oder zumindest weitestgehend zu reduzieren. Somit führt eine Netz-Überspannungen dann nicht mehr zwangsläufig zu einer Spannungsspitze im Zwischenkreis. Die Zwischenkreisspannung kann in diesem Fall trotz Netzüberspannung konstant gehalten werden. Die Thyristorbrückenschaltung kann dabei als vollgesteuerte Brückenschaltung oder als halbgesteuerte Brückenschaltung ausgebildet sein. Für das Betriebsverhalten des Thyristor-Gleichrichters hat es sich als günstig erwiesen, wenn die Eingangsschaltung eine Induktivität aufweist. Mit dieser kann der Thyristor-Gleichrichter vom Energieversorgungsnetz entkoppelt werden.

Im Folgenden wird die Erfindung anhand der in den Figuren dargestellten Ausführungsbeispiele näher beschrieben und erläutert. Es zeigen:
- FIG 1: eine erfindungsgemäße Stromrichterschaltung,
- FIG 2: ein weiteres Ausführungsbeispiel einer erfindungsgemäßen Stromrichterschaltung,
- FIG 3: ein weiteres Ausführungsbeispiel für eine Eingangsschaltung,
- FIG 4: ein weiteres Ausführungsbeispiel für eine Eingangsschaltung,
- FIG 5: ein weiteres Ausführungsbeispiel einer erfindungsgemäßen Stromrichterschaltung,
- FIG 6: ein weiteres Ausführungsbeispiel einer erfindungsgemäßen Stromrichterschaltung,
- FIG 7: ein Ausführungsbeispiel der Stromrichter,
- FIG 8: ein weiteres Ausführungsbeispiel der Stromrichter,
- FIG 9: ein weiteres Ausführungsbeispiel der Stromrichter,
- FIG 10: ein Ausführungsbeispiel für den netzgeführten Stromrichter,
- FIG 11: ein Ausführungsbeispiel für den modularen Multilevel-Stromrichter und
- FIG 12: ein weiteres Ausführungsbeispiel für eine Eingangsschaltung.

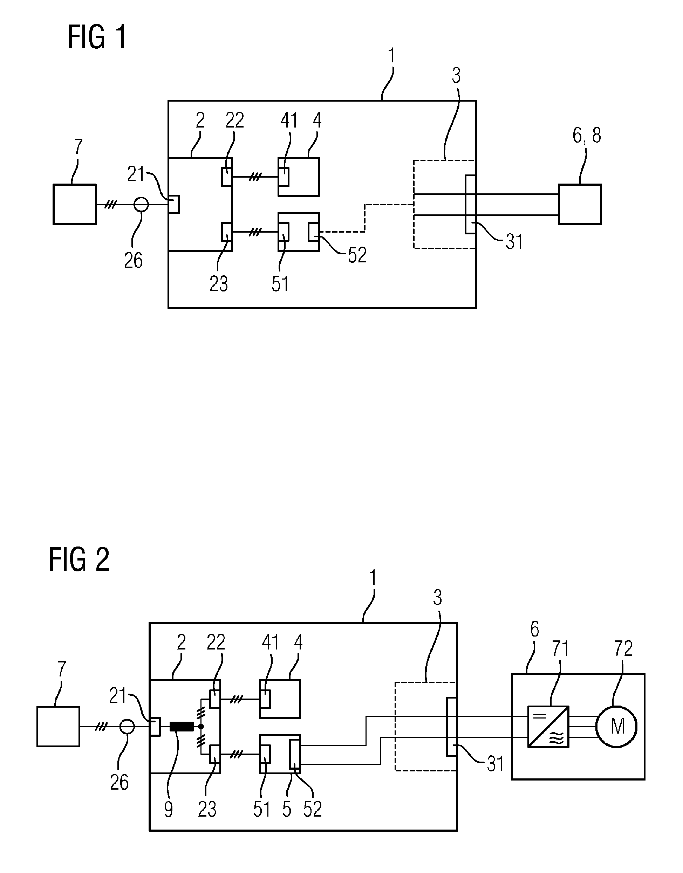

FIG 1 zeigt ein erstes Ausführungsbeispiel einer Stromrichterschaltung 1, die an einem Energieversorgungsnetz 7 angeschlossen ist und mit einer Antriebseinheit 6 bzw. einem weiteren Energieversorgungssystems 8 verbunden ist. Die Stromrichterschaltung 1 weist eine Eingangsschaltung 2, einen Zwischenkreis 3, einen modularen Multilevel-Stromrichter 4 und einen netzgeführten Stromrichter 5 auf. Der modulare Multilevel-Stromrichter 4 ist mit dem ersten Stromrichteranschluss 22 der Eingangsschaltung 2 elektrisch verbunden. Der netzgeführten Stromrichter 5 ist mit dem zweiten Stromrichteranschluss 23 der Eingangsschaltung 2 elektrisch verbunden. Diese beiden elektrischen Verbindungen sind 3phasig ausgeführt, da es sich um Wechselstromverbindungen bzw. Drehstromverbindungen handelt. An dem gleichspannungsseitigen Anschluss 52 des netzgeführten Stromrichters 5 ist der Zwischenkreis 3 angeschlossen. Da der modulare Multilevel-Stromrichter 4 keine Verbindung zum Zwischenkreis 3 aufweist, wird die gesamte Wirkleistung von der Eingangsschaltung 2 zum Zwischenkreis 3 über den netzgeführten Stromrichter 5 übertragen. Der Zwischenkreis 3 kann dabei als Spannungszwischenkreis oder als Stromzwischenkreis ausgebildet sein. Der modulare Multilevel-Stromrichter 4 tauscht mit der Eingangsschaltung 2 bis auf zu vernachlässigende Verluste im wesentlichen Blindleistung aus. Am Zwischenkreisanschluss 31 der Stromrichterschaltung 1 ist eine Antriebseinheit 6 bzw. ein weiteres Energieversorgungsnetz 8 angeschlossen. Energie bezieht die Stromrichterschaltung 1 dabei aus dem Energieversorgungsnetz 7. Der zwischen dem Energieversorgungsnetz 7 und der Stromrichterschaltung 1 fließende Strom wird als Eingangsstrom 26 bezeichnet. Der Eingangsstrom 26 ergibt sich als Überlagerung der Ströme des wechselspannungsseitigen Anschlusses 41 des modularen Multilevel-Stromrichters 4 und des wechselspannungsseitigen Anschlusses 51 des netzgeführten Stromrichters 5. Zur besseren Regelung der einzelnen Ströme weist die Eingangsschaltung 2 eine Induktivität 9 auf.

FIG 2 zeigt ein weiteres Ausführungsbeispiel einer Stromrichterschaltung 1 mit angeschlossener Antriebseinheit 6. Auch diese Anordnung wird über ein Energieversorgungsnetz 7 mit elektrischer Energie gespeist. Die Antriebseinheit 6 weist in diesem Ausführungsbeispiel einen Wechselrichter 71 sowie einen daran angeschlossenen Motor 72 auf. Die Stromrichterschaltung 1 und die Antriebseinheit 6 sind über eine Gleichspannung miteinander verbunden. Zur Vermeidung von Wiederholungen bezüglich übereinstimmender Bestandteile wird auf die Beschreibung zu der FIG 1 und die dortigen Bezugszeichen verwiesen. Auch in diesem Ausführungsbeispiel erfolgt die gesamte Übertragung der Wirkleistung von der Eingangsschaltung 2 zum Zwischenkreis 3 über den netzgeführten Stromrichter 5. Der Zwischenkreis kann dabei als Spannungszwischenkreis oder als Stromzwischenkreis ausgebildet sein. Auch hier dient der modulare Multilevel-Stromrichter 4 nur zum Austausch von Blindleistung. Die Induktivität 9 ermöglicht eine einfachere Steuerbarkeit bzw. Regelbarkeit des Eingangsstromes 26. Sie dient auch der Entkopplung der Stromrichter 4,5 vom Energieversorgungsnetz 7. Darüber hinaus hat es sich als sinnvoll erwiesen, auch zwischen dem ersten Stromrichteranschluss 22 und der Induktivität 9 eine weitere Induktivität vorzusehen. Des Weiteren hat es sich als vorteilhaft erwiesen, alternativ oder zusätzlich, zwischen dem zweiten Stromrichteranschluss 23 der Eingangsschaltung 2 und der Induktivität 9 eine weitere Induktivität vorzusehen.

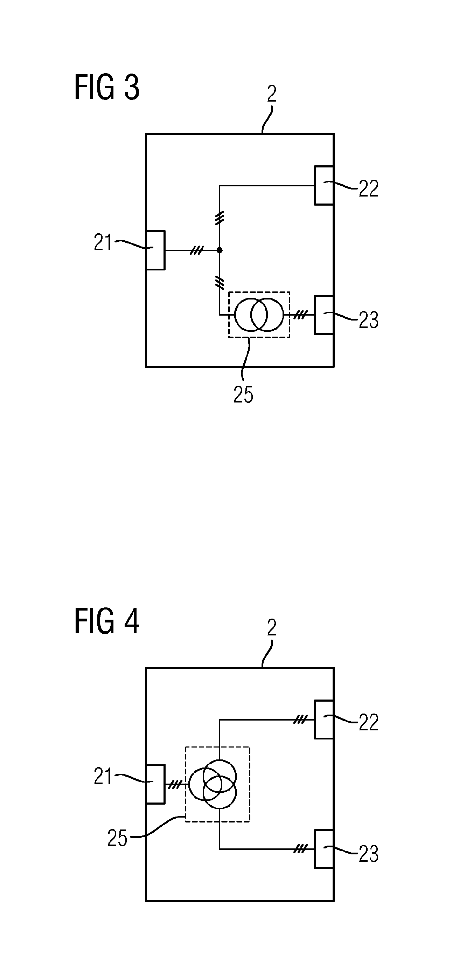

FIG 3 zeigt ein weiteres Ausführungsbeispiel einer Eingangsschaltung 2, die einen Transformator 25 aufweist. Zur Vermeidung von Wiederholungen bezüglich übereinstimmender Bestandteile wird auf die Beschreibung zu den Figuren 1 und 2 sowie die dort eingeführten Bezugszeichen verwiesen. Der Transformator 25 dient dazu, den ersten Stromrichteranschluss 22 der Eingangsschaltung 2 vom zweiten Stromrichteranschluss 23 der Eingangsschaltung 2 galvanisch zu trennen. Darüber hinaus kann mithilfe des Transformators 25 der Spannungslevel des netzgeführten Stromrichters 5 an das Energieversorgungsnetz 7 angepasst werden. Alternativ kann der Transformator 25 anstelle der Anordnung in der Zuleitung zum zweiten Stromrichteranschluss 23, auch in der Zuleitung zum ersten Stromrichteranschluss 22 der Eingangsschaltung angeordnet werden. Insbesondere für den Fall, dass der netzgeführte Stromrichter 5 einen höheren Strom führt als der modulare Multilevel-Stromrichter 4 entstehen durch die Anordnung geringere Verluste.

FIG 4 zeigt ein weiteres Ausführungsbeispiel einer Eingangsschaltung 2, die einen dreiphasigen Transformator 25 aufweist. Zur Vermeidung von Wiederholungen bezüglich übereinstimmender Bestandteile wird auf die Beschreibung zu den Figuren 1 bis 3 sowie die dort eingeführten Bezugszeichen verwiesen. Dieser Transformator 25 dient dazu, den Eingang 21 der Eingangsschaltung 2, den ersten Stromrichteranschluss 22 der Eingangsschaltung 2 sowie den zweiten Stromrichteranschluss 23 der Eingangsschaltung 2 galvanisch voneinander zu trennen. Darüber hinaus können die Spannungslevel der beiden Stromrichter 4,5 an die Spannung eines Energieversorgungsnetzes 7, das an den Eingang 21 Eingangsschaltung 2 angeschlossen werden kann, mithilfe des Transformators 25 angepasst werden.

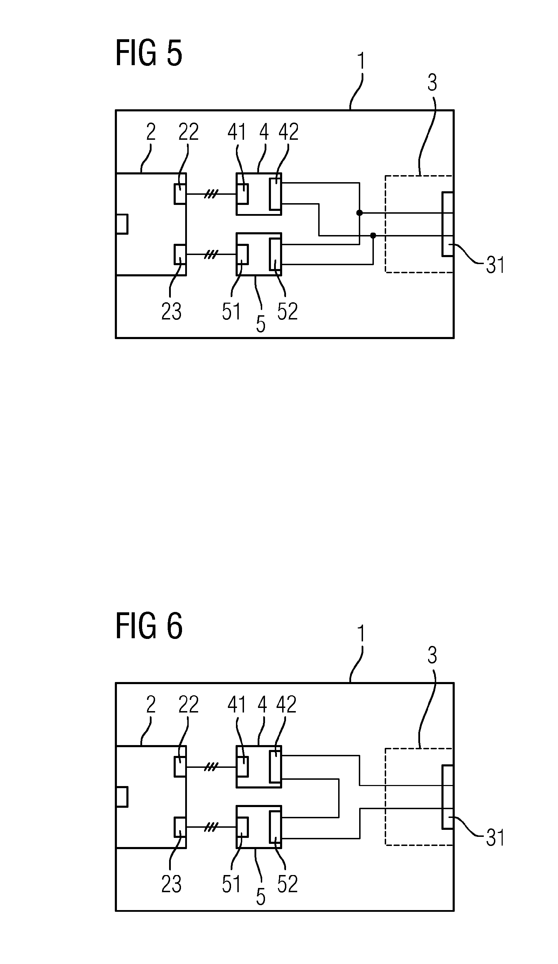

FIG 5 zeigt ein weiteres Ausführungsbeispiel einer Stromrichterschaltung 1. Zur Vermeidung von Wiederholungen bezüglich übereinstimmender Bestandteile wird auf die Beschreibung zu den Figuren 1 bis 4 sowie die dort eingeführten Bezugszeichen verwiesen. Der modulare Multilevel Stromrichter 4 ist in diesem Ausführungsbeispiel mit dem Zwischenkreis 3 elektrisch verbunden. Er ist gleichspannungsseitig mit dem netzgeführten Stromrichter 5 in einer Parallelschaltung angeordnet. Somit kann die Übertragung der Wirkleistung von der Eingangsschaltung 2 zum Zwischenkreis 3 sowohl über den netzgeführten Stromrichter 5 als auch parallel über den modularen Multilevel-Stromrichter 4 erfolgen. Auch eine Aufteilung der gesamten Wirkleistung auf die beiden Stromrichter 4, 5 ist realisierbar. Die Aufteilung auf die beiden Stromrichter 4, 5 kann in jedem beliebigen Verhältnis geschehen. Diese erfolgt gesteuert oder geregelt durch die Regelung des modularen Multilevel-Stromrichters 4. Als besonders vorteilhaft hat es sich erwiesen, die Aufteilung der Wirkleistung derart zu gestalten, dass der modulare Multilevel Stromrichter 4 in etwa wechselspannungsseitigen 30% bis 50% des Gesamtstromes führt.

FIG 6 zeigt ein weiteres Ausführungsbeispiel einer Stromrichterschaltung 1. Zur Vermeidung von Wiederholungen bezüglich übereinstimmender Bestandteile wird auf die Beschreibung zu den Figuren 1 bis 5 sowie die dort eingeführten Bezugszeichen verwiesen. Der modulare Multilevel Stromrichter 4 ist in diesem Ausführungsbeispiel mit dem Zwischenkreis 3 elektrisch verbunden. Er ist gleichspannungsseitig mit dem netzgeführten Stromrichter 5 in einer Reihenschaltung angeordnet. Diese Reihenschaltung erlaubt es, gleichspannungsseitige Spannungsschwankungen am gleichspannungsseitigen Anschluss 52 des netzgeführten Stromrichters 5, die durch Schwankungen der Spannung des Energieversorgungsnetzes 7 entstehen, derart durch den modularen Multilevel-Stromrichter 4 zu kompensieren, dass die Spannung des Zwischenkreises 3 konstant bleibt. Dies ist dadurch möglich, dass aufgrund der Reihenschaltung der gleichspannungsseitigen Anschlüsse der Stromrichter sich die Spannung des Zwischenkreises 3 durch eine Summe der gleichspannungsseitigen Spannungen der beiden Stromrichter 4, 5 ergibt. Da die gleichspannungsseitige Spannung des netzgeführten Stromrichters 5 nicht steuerbar zu sein braucht, bzw. diese im Falle einer Diodenbrücke nicht steuerbar ist, erfolgt die Kompensation durch die gleichspannungsseitige Spannung des modularen Multilevel-Stromrichters 4.

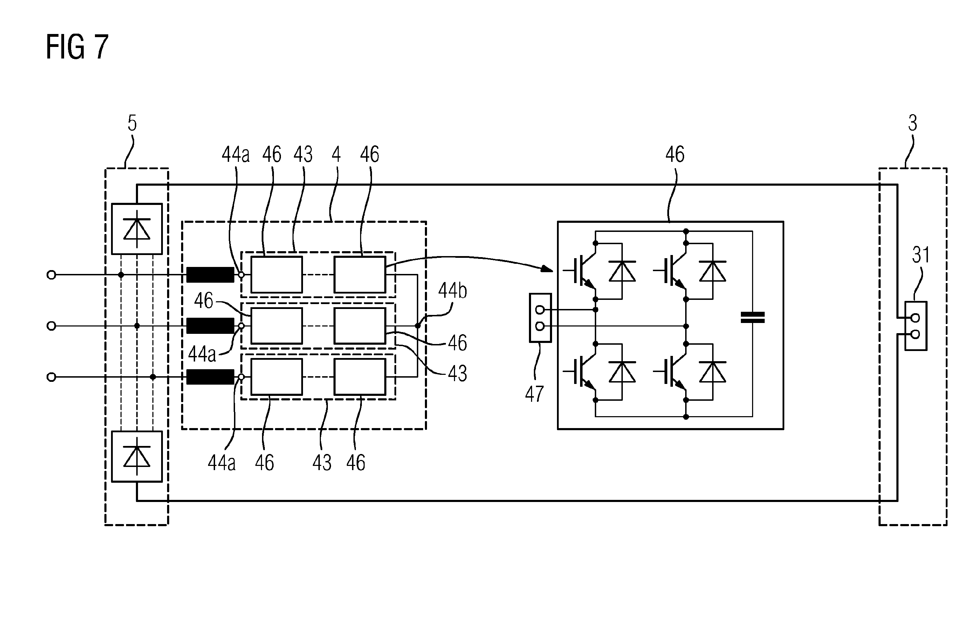

FIG 7 zeigt ein Ausführungsbeispiel der beiden Stromrichter 4, 5. Zur Vermeidung von Wiederholungen bezüglich übereinstimmender Bestandteile wird auf die Beschreibung zu den Figuren 1 bis 6 sowie die dort eingeführten Bezugszeichen verwiesen. Der modulare Multilevel-Stromrichter 4 weist in diesem Ausführungsbeispiel Phasenmodule 43 mit jeweils zwei Phasenmodulanschlüssen 44a, 44b auf. Die ersten Phasenmodulanschlüsse 44a bilden dabei den wechselspannungsseitigen Anschluss 41 des modularen Multilevel-Stromrichters 4. Die zweiten Phasenmodulanschlüsse 44b der Phasenmodule 43 sind jeweils miteinander verbunden. Diese Anordnung des modularen Multilevel-Stromrichters 4 erlaubt nur den Austausch von Blindleistung an seinem wechselspannungsseitigen Anschluss 41. Verluste des modularen Stromrichters 4 sind dabei vernachlässigt. Die gesamte Übertragung der Wirkleistung in den Zwischenkreis 3 erfolgt über den netzgeführten Stromrichter 5. Diese Anordnung erlaubt eine netzfreundliche Einspeisung mit nur geringen Netzrückwirkungen bei einer recht geringen Anzahl an Submodulen 46. Die Submodule 46 dieses Ausführungsbeispiels sind in der Lage, an ihren Anschlussklemmen 47 Spannungen unterschiedlicher Polarität zu erzeugen. Dafür werden, wie dargestellt, mindestens vier Leistungshalbleiter benötigt pro Submodul 46, um die positive Kondensatorspannung, die negative Kondensatorspannung oder die Spannung Null an den Anschlussklemmen 47 des Submoduls 46 bereitzustellen.

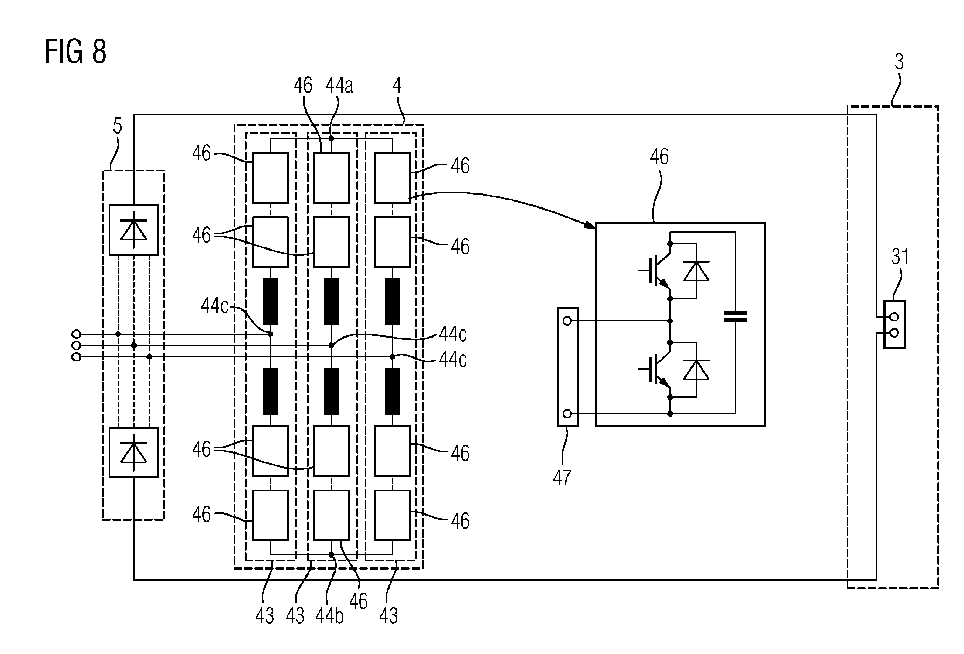

FIG 8 zeigt ein weiteres Ausführungsbeispiel der beiden Stromrichter 4,5. Zur Vermeidung von Wiederholungen bezüglich übereinstimmender Bestandteile wird auf die Beschreibung zu den Figuren 1 bis 7 sowie die dort eingeführten Bezugszeichen verwiesen. Im Gegensatz zu FIG 7 weist dieser modulare Multilevel-Stromrichter Phasenmodule mit drei Phasenmodulanschlüssen 44a, 44b, 44c auf. Die Phasenmodulanschlüsse 44a und 44b stellen den gleichspannungsseitigen Anschluss 42 des modularen Multilevel-Stromrichters 4 dar. Dabei ist der erste Phasenmodulanschluss 44a das positive Potential des gleichspannungsseitigen Anschlusses 42 und der zweite Phasenmodulanschluss 44b das negative Potential des gleichspannungsseitigen Anschlusses 42. Die dritten Phasenmodulanschlüsse bilden den wechselspannungsseitigen Anschluss 41 des modularen Multilevel-Stromrichters. Da der gleichspannungsseitige Anschluss 42 des modularen Multilevel-Stromrichters 4 nicht mit dem Zwischenkreis verbunden ist, erfolgt auch in diesem Ausführungsbeispiel die Übertragung der Wirkleistung in den Zwischenkreis 3 ausschließlich über den netzgeführten Stromrichter 5. Der modulare Multilevel-Stromrichter 4 tauscht, abgesehen von seinen Verlusten, an seinem wechselspannungsseitigen nur Blindleistung aus. Der Vorteil dieser Anordnung besteht in einer besonders kostengünstigen Realisierung des modularen Multilevel-Stromrichters 4. Die Induktivitäten in den Phasenmodulen 43 verbessern das Regelverhalten des modularen Multilevel-Stromrichters 4.

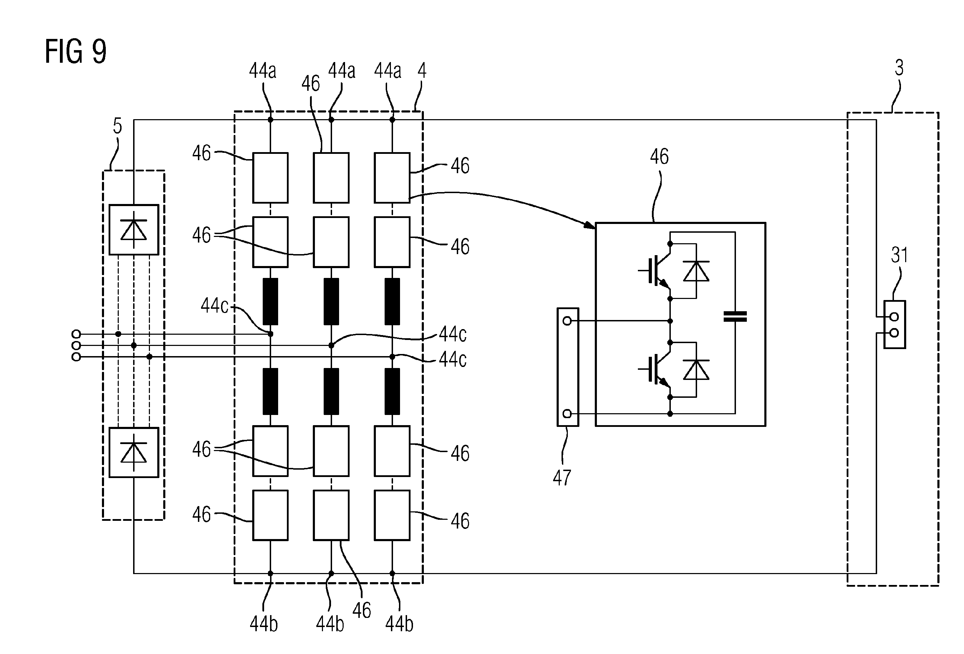

FIG 9 zeigt ein weiteres Ausführungsbeispiel der beiden Stromrichter 4, 5 bei dem die beiden Stromrichter 4, 5 gleichspannungsseitig parallelgeschaltet sind. Zur Vermeidung von Wiederholungen bezüglich übereinstimmender Bestandteile wird auf die Beschreibung zu den Figuren 1 bis 8 sowie die dort eingeführten Bezugszeichen verwiesen. Die Parallelschaltung der gleichspannungsseitigen Anschlüsse 42, 52 von modularem Multilevel-Stromrichter 4 und netzgeführtem Stromrichter 5 ermöglicht es, Wirkleistung sowohl über den modularen Multilevel-Stromrichter 4 als auch über den netzgeführten Stromrichter 5 in den Zwischenkreis 3 zu übertragen. Die Induktivitäten in den Phasenmodulen 43 verbessern das Regelungsverhalten des modularen Multilevel-Stromrichters 4. In diesem Ausführungsbeispiel kann der netzgeführten Stromrichter 5 deutlich kleiner ausgelegt werden, da er nicht die gesamte Wirkleistung in den Zwischenkreis 3 übertragen muss. Durch die geringere übertragene Wirkleistung sind auch die Netzrückwirkungen des netzgeführten Stromrichters 5 geringer. Dadurch ist der Kompensationsaufwand durch den modularen Multilevel-Stromrichter 4 gering, während die durch den modularen Multilevel-Stromrichter 4 zu übertragenden Wirkleistung steigt. Als besonders vorteilhaft hat es sich erwiesen, dass im Nominalbetrieb der modulare Multilevel-Stromrichter 4 und der netzgeführte Stromrichter 5 wechselspannungsseitig in etwa den gleichen Stromeffektivwert aufweisen. Mit diesem Ausführungsbeispiel ist es möglich, eine besonders kostengünstige Stromrichterschaltung 1 zu realisieren.

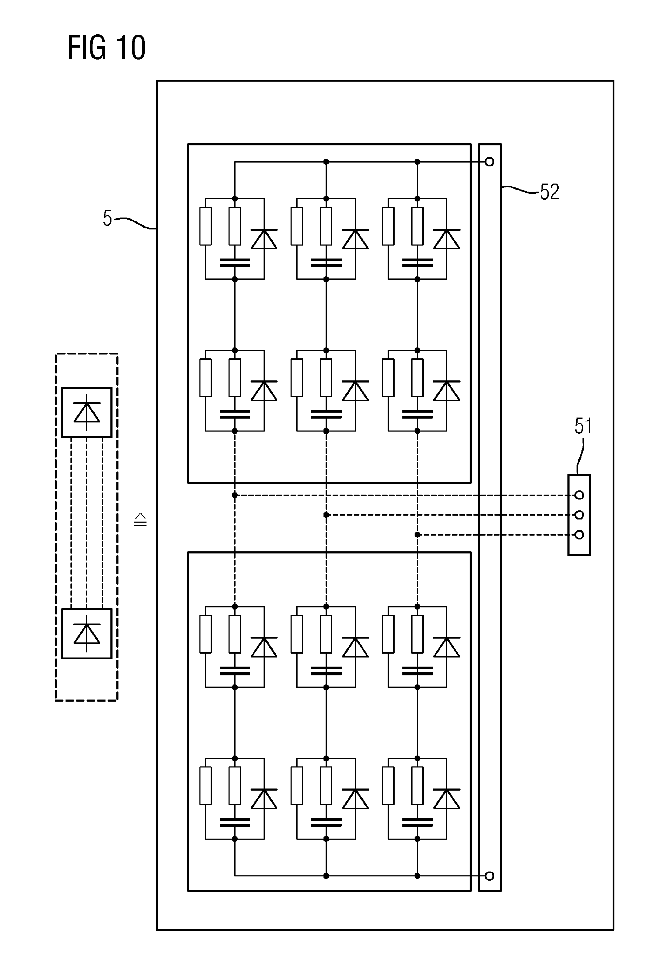

FIG 10 zeigt die Realisierung eines netzgeführten Stromrichters 5. Dabei werden für jede Phase mehrere Dioden in Reihe geschaltet. Zur Symmetrierung der über den einzelnen in Reihe geschalteten Dioden abfallenden Spannung werden zu der Diode Widerstände und Kondensatoren parallel geschaltet.

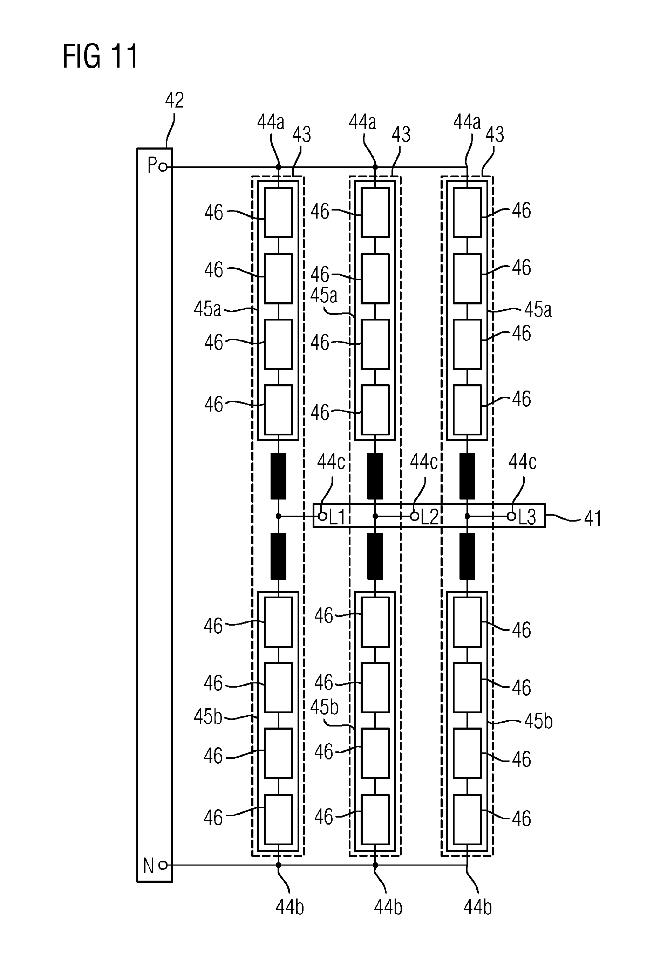

FIG 11 zeigt ein Ausführungsbeispiel eines modularen Multilevel-Stromrichters 4. Dieser ist in diesem Ausführungsbeispiel dreiphasig ausgeführt. Die ersten Phasenmodulanschlüsse 44a der einzelnen Phasenmodule 43 bilden ein positives Potenzial (P) des gleichspannungsseitigen Anschlusses 42 des modularen Multilevel-Stromrichters 4. Die Verbindung der zweiten Phasenmodulanschlüsse 44b bilden das negative Potenzial (N) des gleichspannungsseitigen Anschlusses 42. die einzelnen Phasenmodule 43 weisen eine Reihenschaltung eines ersten Stromrichterventils 45a und eines zweiten Stromrichterventils 45b auf. Der Verbindungspunkt des ersten und des zweiten Stromrichterventils 45a, 45b bildet den dritten Phasenmodulanschluss 44c. Die drei Phasenmodulanschlüsse 44c stellen den wechselspannungsseitigen Anschluss 41 des modularen Multilevel-Stromrichters 4 dar. Zur besseren Regelbarkeit des Stromrichters sind in den einzelnen Phasenmodule Induktivitäten (L) angeordnet. Die einzelnen Stromrichterventile 45a, 45b weisen eine Reihenschaltung von Submodulen 46 auf. Je höher die Anzahl der Submodule 46 in den Stromrichterventilen 45a, 45b desto genauer lassen sich beliebige Spannungsverläufe am wechselspannungsseitigen Anschluss 41 des modularen Multilevel-Stromrichters 4 erzeugen. Insbesondere ein Sinusverlauf ist mit geringem Klirrfaktor realisierbar.

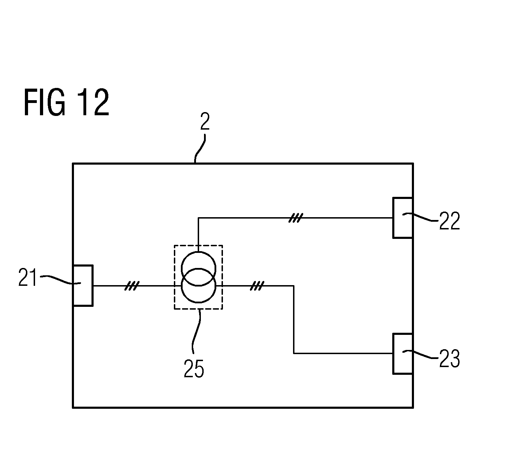

FIG 12 zeigt ein weiteres Ausführungsbeispiel einer Eingangsschaltung 2. Der Transformator 25 erlaubt dabei, eine Längsspannung zur Netzspannung zu addieren. Dabei wird der Netzspannung durch den Transformator 25 und dem modularen Multilevel-Stromrichter 4, der über den ersten Stromrichteranschluss 22 mit dem Transformator 25 verbunden ist, eine Spannung hinzugefügt, die dann am zweiten Stromrichteranschluss 23 anliegt. Die Höhe und Phasenlage der hinzugefügten Spannung wird durch den modularen Multilevel-Stromrichter generiert. Auch in dieser Anordnung kann der modulare Multilevel-Stromrichter 4 Oberschwingungen des Stromes, die durch den netzgeführten Stromrichter 5 entstehen kompensieren und damit vom Energieversorgungsnetz 7 fernhalten. Darüber hinaus kann der modulare Multilevel-Stromrichter 4 Überspannungen und Unterspannungen im Netz ausgleichen. In diesem Fall werden die zum zweiten Stromrichteranschluss 23 durch Hinzufügen einer weiteren Spannung am Transformator derart beseitigt, dass am zweiten Stromrichteranschluss diese Überspannungen und Unterspannungen keine Auswirkungen mehr haben. Damit kann die Spannung des Zwischenkreises 3 an den Anschlussklemmen 31 auch dann konstant gehalten werden, wenn der netzgeführte Stromrichter 5 nicht ungesteuert betrieben wird bzw. eine Steuerung/Regelung aufweist, die keine Information über die Netzspannung auswertet. Damit ist die Spannung im Zwischenkreis unabhängig von Netzüber- oder -unterspannungen.

Obwohl die Erfindung im Detail durch die bevorzugten Ausführungsbeispiele näher illustriert und beschrieben wurde, ist die Erfindung nicht alleine auf die offenbarten Beispiele beschränkt und andere Variationen können vom Fachmann hieraus abgeleitet werden, ohne den Schutzumfang der Erfindung zu verlassen.

## Patentansprüche

1. Stromrichterschaltung (1) aufweisend
- eine Eingangsschaltung (2) mit einem Eingang (21), einem ersten Stromrichteranschluss (22) und einem zweiten Stromrichteranschluss (23),
- einen Zwischenkreis (3),
- einen modularen Multilevel-Stromrichter (4) mit einem wechselspannungsseitigen Anschluss (41) und
- einen netzgeführten Stromrichter (5) mit einem wechselspannungsseitigen Anschluss (51) und einem gleichspannungsseitigen Anschluss (52),
wobei an den Zwischenkreis (3) eine Antriebseinheit (6) oder ein weiteres Energieversorgungsnetz (8) anschließbar ist, wobei der modulare Multilevel-Stromrichter (4) Submodule (46) aufweist, mit denen am wechselspannungsseitigen Ausgang (41) des modularen Multilevel-Stromrichters eine stufenförmige Ausgangsspannung erzeugbar ist, dessen Stufenanzahl von der Anzahl der Submodule (46) abhängt,
wobei der erste Stromrichteranschluss (22) der Eingangsschaltung (2) mit dem wechselspannungsseitigen Anschluss (41) des modularen Multilevel-Stromrichters (4) und der zweite Stromrichteranschluss (23) der Eingangsschaltung (2) mit dem wechselspannungsseitigen Anschluss (51) des netzgeführten Stromrichters (5) elektrisch verbunden sind,
wobei der Zwischenkreis (3) mit dem gleichspannungsseitigem Anschluss (52) des netzgeführten Stromrichters (5) elektrisch verbunden ist,
wobei der Eingang (21) der Eingangsschaltung (2) mit einem Energieversorgungsnetz (7) verbindbar ist,
wobei der modulare Multilevel-Stromrichter (4) derart betreibbar ist, dass bei einer Verbindung des Eingangs (21) der Eingangsschaltung (2) mit dem Energieversorgungsnetz (7) ein vorgebbarer zeitlicher Verlauf eines Eingangsstromes (26) erzeugbar ist.

2. Stromrichterschaltung (1) nach Anspruch 1, wobei der modulare Multilevel-Stromrichter (4) derart betreibbar ist, dass am Eingang (21) der Eingangsschaltung (2) ein Verlauf des Eingangsstromes (26) erzeugbar ist, der nahezu einem Sinusverlauf entspricht.

3. Stromrichterschaltung (1) nach einem der Ansprüche 1 oder 2, wobei der modulare Multilevel-Stromrichter (4) und der netzgeführten Stromrichter (5) jeweils wechselspannungsseitig elektrisch parallel angeordnet sind,

4. Stromrichterschaltung (1) nach einem der Ansprüche 1 bis 3, wobei der erste Stromrichteranschluss (22) der Eingangsschaltung (2) und der zweite Stromrichteranschluss (23) der Eingangsschaltung (2) galvanisch voneinander getrennt sind.

5. Stromrichterschaltung (1) nach einem der Ansprüche 1 bis 4, wobei die Eingangsschaltung (2) in einer elektrischen Verbindung zwischen dem ersten Stromrichteranschluss (22) und dem zweiten Stromrichteranschluss (23) einen Transformator (25) aufweist.

6. Stromrichterschaltung (1) nach einem der Ansprüche 1 bis 5, wobei die Eingangsschaltung (2) einen Transformator (25) mit mindestens drei Wicklungssystemen aufweist,
wobei das erste Wicklungssystem (61) mit dem Eingang (21) der Eingangsschaltung (2) elektrisch verbunden ist,
wobei das zweite Wicklungssystem (62) mit dem ersten Stromrichteranschluss (22) der Eingangsschaltung (2) elektrisch verbunden ist und
wobei das dritte Wicklungssystem (63) mit dem zweiten Stromrichteranschluss (23) der Eingangsschaltung (2) elektrisch verbunden ist.

7. Stromrichterschaltung (1) nach einem der Ansprüche 1 bis 6, wobei der modulare Multilevel-Stromrichter (4) einen gleichspannungsseitigen Anschluss (42) aufweist.

8. Stromrichterschaltung (1) nach Anspruch 7, wobei der gleichspannungsseitige Anschluss (42) des modularen Multilevel-Stromrichters (4) und der gleichspannungsseitige Anschluss (52) des netzgeführten Stromrichters (5) in einer Parallelschaltung angeordnet sind, wobei die Parallelschaltung den Zwischenkreis (3) darstellt.

9. Stromrichterschaltung (1) nach Anspruch 7, wobei der gleichspannungsseitige Anschluss (42) des modularen Multilevel-Stromrichters (4) und der gleichspannungsseitigen Anschluss (52) des netzgeführten Stromrichters (5) in einer Reihenschaltung angeordnet sind wobei die Reihenschaltung den Zwischenkreis (3) darstellt.

10. Stromrichterschaltung (1) nach Anspruch 7, wobei der gleichspannungsseitige Anschluss (42) des modularen Multilevel-Stromrichters (4) und der gleichspannungsseitige Anschluss (52) des netzgeführten Stromrichters (5) elektrisch getrennt sind.

11. Stromrichterschaltung (1) nach einem der Ansprüche 7 bis 10, wobei der modulare Multilevel-Stromrichter (4) mindestens ein Phasenmodul (43) mit mindestens drei Phasenmodulanschlüsse (44a, 44b, 44c) aufweist, wobei das Phasenmodul (43) zwischen einem ersten Phasenmodulanschluss (44a) und einem zweiten Phasenmodulanschluss (44b) eine Reihenschaltung von einem ersten Stromrichterventil (45a) und einem zweiten Stromrichterventil (45b) aufweist,
wobei eine elektrische Verbindung zwischen dem ersten Stromrichterventil (45a) und dem zweiten Stromrichterventil (45b) mit einem dritten Phasenmodulanschluss (44c) elektrisch verbunden ist,
wobei der dritte Phasenmodulanschluss (44c) den wechselspannungsseitigen Anschluss (41) des modularen Multilevel-Stromrichters (4) darstellt,
wobei der erste Phasenmodulanschluss (44a) und der zweite Phasenmodulanschluss (44b) den gleichspannungsseitigen Anschluss (42) des modularen Multilevel-Stromrichters (4) darstellen,
wobei im Falle von mehr als einem Phasenmodul (43) diese bezüglich ihres ersten Phasenmodulanschlusses (44a) und ihres zweiten Phasenmodulanschluss (44b) in einer Parallelschaltung angeordnet sind und
wobei das erste Stromrichterventil (45a) und das zweite Stromrichterventil (45b) jeweils eine Reihenschaltung von Submodulen (46) aufweisen.

12. Stromrichterschaltung (1) nach einem der Ansprüche 1 bis 6, wobei der modulare Multilevel-Stromrichter (4) mindestens zwei Phasenmodule (43) mit jeweils einem ersten Phasenmodulanschluss (44a) und einen zweiten Phasenmodulanschluss (44b) aufweist,
wobei die Phasenmodule (43) jeweils zwischen dem ersten Phasenmodulanschluss (44a) und dem zweiten Phasenmodulanschluss (44b) eine Reihenschaltung von Submodulen (46) aufweisen, wobei an Anschlussklemmen (47) der Submodule (46) Spannungen mit unterschiedlicher Polarität erzeugbar sind,
wobei der erster Phasenmodulanschluss (44a) der mindestens zwei Phasenmodulanschlüsse (44) den wechselspannungsseitigen Anschluss (41) des modularen Multilevel-Stromrichters (4) darstellt und
wobei jeweils der zweite Phasenmodulanschluss (44b) der Phasenmodule (43) miteinander elektrisch verbunden sind.

13. Stromrichterschaltung (1) nach einem der Ansprüche 1 bis 12, wobei der netzgeführte Stromrichter (5) als Diodengleichrichter ausgeführt ist.

14. Stromrichterschaltung (1) nach einem der Ansprüche 1 bis 13, wobei der netzgeführte Stromrichter (5) eine Thyristorbrückenschaltung aufweist.

15. Verfahren zum Betreiben einer Stromrichterschaltung (1) nach einem der Ansprüche 1 bis 14, wobei der modulare Multilevel-Stromrichter (4) derart gesteuert oder geregelt wird, einen Eingangsstrom (26) mit einem vorgebbare Zeitverlauf am Eingang (21) der Eingangsschaltung (2) zu erzeugen.

16. Verfahren nach Anspruch 15, wobei der modulare Multilevel-Stromrichter (4) derart gesteuert oder geregelt wird, dass ein erster Strom (27) am wechselspannungsseitigen Anschluss (41) des modulare Multilevel-Stromrichters (4) in Abhängigkeit von einem zweiten Strom (28) am wechselspannungsseitigen Anschluss (51) des netzgeführten Stromrichters (5) derart erzeugt wird, dass die Überlagerung des ersten Stromes (27) und des zweiten Stromes (28) am Eingang (21) der Eingangsschaltung (2) zu einem Eingangsstrom (26) führt, der einen vorgebbaren Zeitverlauf entspricht.

17. Verfahren nach einem der Ansprüche 15 oder 16, wobei der vorgebbare Zeitverlauf nahezu einem Sinusverlauf entspricht.

18. Verfahren nach einem der Ansprüche 15 bis 17, wobei der modulare Multilevel-Stromrichter (4) derart gesteuert oder geregelt wird, dass er im wesentlichen Blindleistung mit der Eingangsschaltung (2) austauscht.

19. Verfahren nach einem der Ansprüche 15 bis 18, wobei der modulare Multilevel-Stromrichter (4) derart gesteuert oder geregelt wird, dass die Spannung des Zwischenkreises (3) einen im Wesentlichen konstanten, vorgebbaren Wert annimmt.

20. Verfahren zum Betreiben einer Stromrichterschaltung (1) nach Anspruch 14, wobei die Thyristorbrückenschaltung derart gesteuert oder geregelt wird, dass die Spannung des Zwischenkreises (3) einen im Wesentlichen konstanten, vorgebbaren Wert annimmt.
